Europäisches Patentamt

European Patent Office

Office européen des brevets

(11) Publication number: 0 292 052
A2

# EUROPEAN PATENT APPLICATION

(21) Application number: 88200938.4

(51) Int. Cl.4: **A23K 1/18** , **A01K 61/00**

(22) Date of filing: **11.05.88**

(30) Priority: **15.05.87 FI 872147**

(43) Date of publication of application:
**23.11.88 Bulletin  88/47**

(84) Designated Contracting States:
**AT BE CH DE ES FR GB GR IT LI LU NL SE**

(71) Applicant: **SUOMEN SOKERI OY**
**P.O. Box 105**
**SF-00241 Helsinki(FI)**

(72) Inventor: **Mäntykoski-Paukku, Else-Maj**
**Knappa**
**SF-10160 Degerby(FI)**
Inventor: **Riikonen, Pirkko**
**Merivirta 14 A 6**
**SF-02320 Espoo(FI)**
Inventor: **Soivio, Antti**
**Pitkänkalliontie 11 A**
**SF-02170 Espoo(FI)**
Inventor: **Bäckström, Monica**
**Mäkipellontie 16**
**SF-00320 Helsinki(FI)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) Fish feed, procedure for producing same, and feeding method.

(57) A proteinaceous fish feed mainly for young fish, in particular for lavaret fry, said fish feed containing protein raw material about 80-100% by weight and bonding agent about 0-20% by weight and having has a powdery constitution, particle size less than 0.35 mm.

EP 0 292 052 A2

## FISH FEED, PROCEDURE FOR PRODUCING SAME, AND FEEDING METHOD

The present invention concerns a proteinaceous fish feed, mainly for young fish, particularly for lavaret fry; a procedure for producing said fish feed; and a method for feeding young fish; in particular lavaret fry.

Feeding newly hatched fish fry, particularly lavaret fry and the young of fish of the salmon family, with industrially produced complete feeds has turned out highly problematic (Hofer, R., Effects of Artificial Diets on the Digestive Process of Fish Larvae, Nutrition and Feeding in Fish, Academic Press 1985). Adm. 'stration of existing feed preparations to young fish has yielded poor growth results, and the young fish have shown high mortality. The cause for the poor results recorded in young fish feeding tests are not fully understood. One cause responsible for failure to utilize the feed is thought to be, in most fish species, the digestive system of young fish, which is markedly shorter and less developed than that of adult fish. Hereby the degree of utilizability of the feed by young fish is markedly lower than that encountered in adult fish. Attempts have been made to improve feed preparations intended for young fish, by adding to them enzymes which split the feed to be better digestible. However, the results obtained with enzymoferous feeds have not been any better than before.

The research team of Dabrowski et al. (Agriculture, 1984, p. 11-20, and Bull Japan Soc Sci Fish, 1986 52, p. 23-30) has tried out unicellular protein as feed for young fish. The feeding results recorded with unicellular protein were likewise poor, and only about 50% of the young fish which were given said feeds survived.

Normally it has been necessary, for successful young fish feeding, to use expensive live plankton.

The object of the present invention is to eliminate the drawbacks mentioned above. The specific object of the invention is to provide a novel kind of industrially produced fish feed which is particularly well suited for young fish, e.g. for lavaret fry.

A further object of the invention is to provide a fish feed which is considerably less expensive than presently used plankton.

It is a further object of the invention to provide a procedure for producing said fish feed, and a method for use in feeding young fish.

The present invention is based on results recorded in research, according to which fish feed particularly appropriate for young fish can be industrially produced by selecting a proper feed composition and proper particle size of the feed.

The fish feed of the invention contains protein raw material 80 to 100% and bonding agent about 0 to 20%, of the dry matter of the feed. The feed has powdery constitution, with particle size under 0.35 mm. The apparent density (bulk density) of the feed is in the range from 650 to 750 g/l. Furthermore, the settling rate of the particles in water is 10 cm/s at the most. Thanks to its uniform and small enough particle size the fish feed descends very slowly in water, or floats, whereby the feed particles are better reachable to the fish fry.

The feed of the invention consists mainly of protein raw material. In the protein raw material, the protein and amino acid composition has to be appropriate for young fish. A suitable protein raw material is fish meal, which is advantageously prepared by drying fresh fish at low temperature so that the proteins will not be destroyed. Advantageously, the protein raw material contains fish meal 20 to 100%, calculated on the dry weight of the protein raw material.

In addition to fish meal, the protein raw material may contain unicellular protein, such as Trichoderma cell mass, and/or enzyme protein, such as cellulase, e.g. about 0 to 80% by weight.

Other sources of protein may equally be used, e.g. vegetable protein, such as corn gluten and/or soy. The protein raw material also contains free amino acids, such as lysine, methionine, arginine, threonine and/or tryptophane.

The ingredients contained by the protein raw material, such as fish meal, may if desired be treated hydrothermally (that is subjected to water/heat treatment) and/or enzymatically in order to convert the protein raw material into a form which is more suitable for young fish and/or in view of feed production.

For bonding agent fat is advantageously used, e.g. fish oil and/or lecithin, e.g. soy lecithin. The fish feed may contain fish oil about 0 to 15% by weight and/or lecithin about 0 to 8% by weight in such manner that the total bonding agent quantity in the feed is not over 20% by weight of the feed dry matter. The fat binds the protein raw material of the feed mix together, for pelleting and grinding. Lecithin emulsifies fats and thereby improves the absorption of fats into the protein raw material. Fat is an advantageous bonding agent because young fish can use the fat in the feed as a source of energy. Other bonding agents appropriate for fish, and particularly for young fish, may also be used. In an embodiment, the feed contains glucose about 0 to 10% of the feed dry matter. Young fish are also able to utilize glucose.

When using the fish feed of the invention as a complete feed, one adds to the feed such vitamins and trace elements which are necessary for fish, e.g. about 0 to 1% by weight.

When fish feed according to the invention is being produced, the dry raw materials are ground, if required, and screened to particle size less than 0.35 mm. The raw materials are mixed together and a bonding agent is possibly added, e.g. oil and/or lecithin, and , if required, vitamins and trace elements. The feed mix thus obtained is granulated, ground and screened to particle size less than 0.35 mm, by procedures known in themselves in the art.

The fish feed of the invention has an appropriate protein and amino acid composition and uniform, small enough particle size, whereby the feed is eminently suitable to be used in feeding newly hatched fish fry. Young fish are able to utilize the feed, and the feed moreover descends very slowly in the water, whereby the young fish can reach the feed particles with greater ease. The feed of the invention is particularly well suited to be used in feeding lavaret fry, but it may also be used for other young fish, e.g. for the fry of salmon or other fish of the salmon family.

The industrially produced fish feed of the invention commands a price which is considerably more favourable than that of live plankton, which may also be used. The feed is furthermore easy to produce, using procedures and apparatus known in the art of feed preparation.

The invention is described in the following in detail with the aid of embodiment examples.

Example 1

In Table 1 are presented examples of fish feed according to the invention. The quantities are stated in per cent of the feed dry weight. "ET" means enzyme treatment.

The feeds of Table 1 were used in young fish growing tests.

TABLE 1. Some fish feeds according to the invention

| Raw material | Feed No. | | | | | |
|---|---|---|---|---|---|---|
| | 1 | 2 | 3 | 4 | 5 | 6 |
| Fish meal (no ET) | 50 | | 90 | | 80 | |
| Fish meal (ET) | | 50 | | 90 | | 80 |
| Enzyme protein | 10 | 30 | | | | |
| Unicellular protein | 30 | 10 | | | | |
| Fish oil | 7 | 7 | 7 | 7 | 7 | 7 |
| Lecithin | 3 | 3 | 3 | 3 | 3 | 3 |
| Glucose | | | | | 10 | 10 |
| Vitamins and Trace elements | | | | | | |

The dry, and dried, raw materials, part of them possibly subjected to enzyme treatment, are ground to particle size less than 0.35 mm. To the powdery mixture are added fish oil, lecithin and possibly vitamins and trace elements. The feed mix thus obtained is granulated, crumbled, ground and screened to particle size less than 0.35 mm. The apparent density (bulk density) of the feed is 650 to 750 g/l, and the settling rate of the particles is at most 10 cm/s (in water).

According to the results recorded in growing tests, the fish feeds listed in Table 1 are eminently suitable to be used particularly in initial growing of newly hatched lavaret fry. The survival percentage was over 80%, which was most unexpected. The feeds are also suitable to be given to other young fish, for instance to salmon fry. The feed of the invention may also be used in feeding adult fish.

The embodiment examples are merely intended to illustrate the invention, without in any way restricting it.

## Claims

1. A protein-containing fish feed mainly for young fish, in particular for lavaret fry, characterized in that said fish feed contains protein raw material about 80-100% by weight and bonding agent about 0-20% by weight, that the fish feed has powdery constitution, and that the particle size of the powdery feed is under 0.35 mm.

2. Fish feed according to claim 1, characterized in that the protein raw material contains fish meal about 20-100% by weight.

3. Fish feed according to claim 1 or 2, characterized in that the protein raw material contains unicellular protein and/or enzyme protein about 0-80% by weight.

4. Fish feed according to any one of claims 1-3, characterized in that the bonding agent contains fat, e.g. fish oil about 0-15% by weight and/or lecithin about 0-8% by weight.

5. Fish feed according to any one of claims 1-4, characterized in that the fish feed contains glucose about 0-10% by weight.

6. Fish feed according to any one of claims 1-53, characterized in that the fish feed contains vitamins and trace elements about 0-1% by weight.

7. Fish feed according to any one of claims 1-6, characterized in that the nominal density (bulk density) of the fish feed is about 650-750 g/l, and that the settling rate in water of the particles is 10 cm/s at a maximum.

8. Procedure for producing fish feed according to any one of claims 1-7, characterized in that to the dry protein raw materials are added possibly a bonding agent and/or the vitamins and trace elements, the mixture is granulated and ground to particle size less than 0.35 mm.

9. Procedure according to claim 8, characterized in that glucose is added to the fish feed.

10. A method for feeding young fish, in particular lavaret fry, characterized in that the young fish are given fish feed containing protein raw material about 80-100% by weight and bonding agent about 0-20% by weight and which has a particle size less than 0.35 mm.

11. Method according to claim 10, characterized in that the young fish are given fish feed containing glucose about 0-10% by weight.